# DEMANDE DE BREVET EUROPEEN

(11) **EP 2 733 400 A1**
(43) Date de publication de la demande: **21.05.2014**
(21) Numéro de dépôt: 13350002.5
(22) Date de dépôt: 14.11.2013
(51) Int. Cl.: F16K 31/08, F16K 31/42

(54) **Pilote d'une vanne hydraulique**

(30) Priorité: 16.11.2012 FR 1203076
(71) Demandeur: Hydrelis, 62360 Isques (FR)
(72) Inventeur: Chatelard, Philippe, 62152 Neufchatel Hardelot (FR)
(74) Mandataire: Tournel, Jean Louis

(57) **Abrégé**

L'invention a pour objet un dispositif de commande de l'obturateur 2 d'une vanne 1 à commande par champs magnétique ladite vanne comprenant entre l'amont et l'aval un obturateur 2 dont le déplacement est commandé par ledit dispositif 3 de commande lequel comprend un piston 4 guidé en translation dans un alésage dont une extrémité du piston présente une face 4A dite face de commande destinée à venir au contact d'une face 5A aimantée d'un aimant 5 permanent et dont l'autre extrémité est destinée à obturer un canal 6 d'évacuation d'une chambre 7 de commande s'opposant à l'ouverture de l'obturateur, la face aimantée étant dans un plan parallèle à la face de commande le dit dispositif de commande étant caractérisé en ce que la surface de l'une des faces que sont la face de commande 4A et la face 5A aimantée est d'étendue moindre que l'autre surface, la dite face étant constituée par le cumul de faces élémentaires 40 planes régulièrement réparties.

## Description

L'invention se rapporte à un dispositif de commande de l'obturateur d'une vanne à commande par champs magnétique.

Pour contrôler le passage d'un fluide, il est connu d'utiliser des vannes soient manuelles soient motorisées mais également des vannes pilotées par un électro-aimant.

Ces vannes comprennent un corps dans lequel sont définies une zone amont et une zone avale entre lesquelles zones sont logés un obturateur et son siège. Lorsque l'obturateur est appliqué sur son siège, la circulation du fluide entre les zones amont et aval est interrompue.

Un obturateur peut se présenter sous différente forme mais comporte deux faces opposées dont une s'appuie sur un siège en position de fermeture de la vanne..

L'obturateur est soumis à deux forces opposées, une force résultant de la pression en amont sur une des deux faces de l'obturateur et une force résultant d'une chambre dite de commande alimentée par le fluide provenant de l'amont s'exerçant sur la deuxième face de l'obturateur. La force dite force de commande qui s'exerce sur la deuxième face est légèrement plus grande que la première force ce qui maintient l'obturateur sur son siège. Un canal d'évacuation de la chambre de commande contrôlé par un piston permet de libérer le fluide dans la chambre de commande ce qui déséquilibre les forces amont et aval et permet d'écarter l'obturateur de son siège.

La commande du piston est en général assurée par un électroaimant.

Pour éviter une consommation de courant, le noyau a soit une position stable soit a deux positions stables. L'une de ses positions stables est obtenue par un aimant permanent tandis que l'autre est souvent obtenue à l'aide d'un ressort.

Dans certaines conceptions de vannes, le dispositif de commande du noyau comporte donc un aimant permanent, qui définit une position de repos du noyau et donc un état de repos de la vanne. C'est notamment le cas des vannes dites « bistables », dont les positions ouverte et fermée sont toutes deux stables. Dans une de ces positions, le noyau est maintenu en place par l'attraction de l'aimant. Dans l'autre position, il est maintenu en place par un autre dispositif, en général un ressort.

Dans une telle vanne, le noyau peut donc être durablement en contact avec l'aimant permanent. Pour garantir la bonne stabilité de cette position, la position du noyau par rapport à l'aimant doit être précisément définie, de telle sorte à garantir la force d'attraction. En particulier, les surfaces par lesquelles ces deux pièces sont en contact doivent être précises.

Dans certaines applications, la consommation électrique de l'électroaimant doit être aussi limitée que possible. C'est par exemple le cas des vannes sans alimentation électrique, qui fonctionnent avec une pile ou une batterie. Ces appareils sont en effet intéressants en ce qu'ils ne nécessitent pas d'alimentation électrique, qui serait couteuse dans certaines circonstances. Des durées de vie de pile ou de batterie trop courtes seraient de nature à réduire voire à annuler cet avantage.

Or il arrive parfois que des surfaces de contact très lisses, favorables à la stabilité de la position du noyau, conduisent à un phénomène de « collage » (« slip and stick »). De plus, un phénomène de ventouse, causé par la difficulté que peut rencontrer le fluide pour remplir l'espace en train de se constituer entre le noyau et l'aimant quand on cherche à les séparer, requiert un effort de la part de l'électroaimant, et donc une consommation énergétique qu'il serait intéressant de réduire.

On connait un système DE 39 39 537 où entre l'aimant permanent et la face du piston est prévu un disque amortisseur et l'extrémité du piston est de section réduite pour limiter les frottements avec la chemise dans laquelle coulisse le dit piston. Le collage des faces de l'aimant et du piston ne peut se poser dans la mesure où ces faces ne sont jamais en contact. En éloignant la face aimantée de l'autre face on modifie la bonne canalisation du flux magnétique et donc la stabilité.

Est connu DE10 2009 015 231 où il est fait appel à des aimants permanents montés pour se repousser.

L'invention se propose d'apporter une solution.

A cet effet, l'invention a pour objet un dispositif de commande de l'obturateur d'une vanne à commande par champs magnétique ladite vanne comprenant entre l'amont et l'aval un obturateur dont le déplacement est commandé par ledit dispositif de commande lequel comprend un piston guidé en translation dans un alésage dont une extrémité du piston présente une face dite face de commande e destinée à venir au contact direct d'une face aimantée d'un aimant permanent et dont l'autre extrémité est destinée à obturer un canal d'évacuation d'une chambre de commande s'opposant à l'ouverture de l'obturateur, la face aimantée étant dans un plan parallèle à la face de commande le dit dispositif de commande étant caractérisé en ce que la surface de l'une des faces que sont la face de commande et la face aimantée est d'étendue moindre que l'autre surface et est constitué par le cumul de faces planes élémentaires régulièrement réparties.

L'invention sera bien comprise à l'aide de la description ci après faites à titre d'exemple en regard du dessin qui représente :

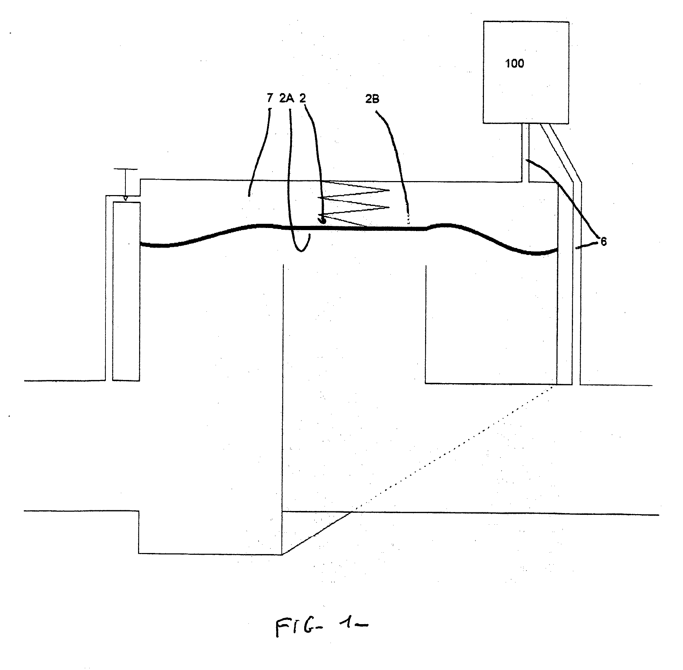

FIG 1 :Valve en position ouverte

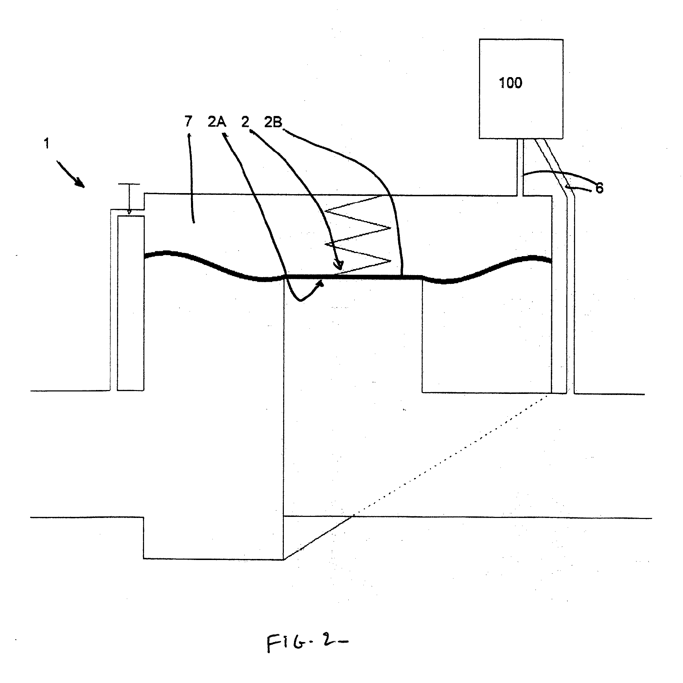

FIG 2 : Valve en position fermée

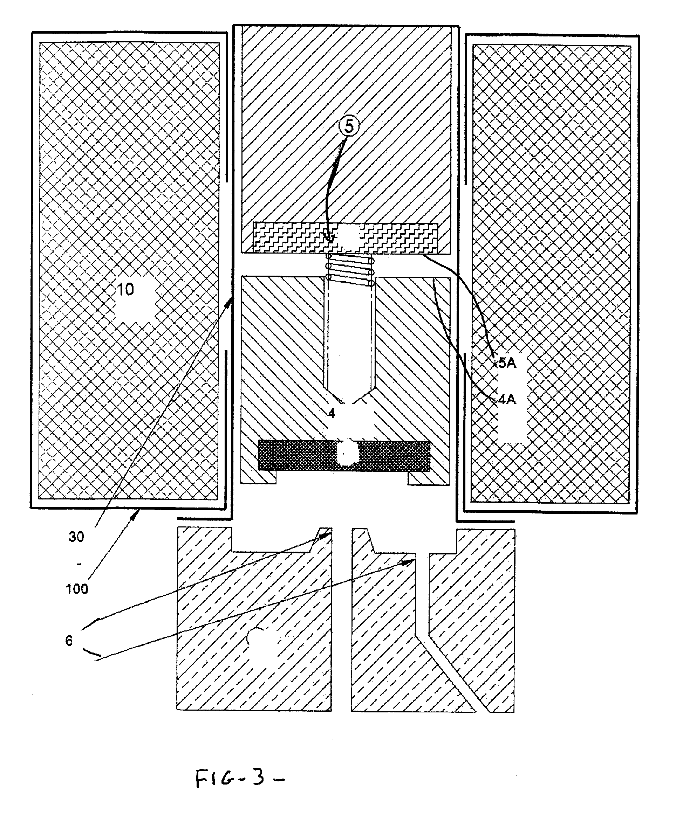

FIG 3 : Dispositif de commande en cours d'ouverture
FIG 4 à FIG 7 :un détail du dispositif de commande selon différentes solutions.

En se reportant au dessin, on voit une vanne 1 comprenant entre l'amont et l'aval un obturateur 2 destiné à interrompre la circulation d'un fluide entre une zone amont et une zone aval.

L'obturateur est soumis à deux forces opposées à savoir à une force résultant de la pression sur une 2A des deux faces de l'obturateur et à une deuxième force résultant d'une chambre 7 dite de commande alimentée par le fluide provenant de l'amont s'exerçant sur l'autre face de l'obturateur.

La force dite force de commande qui s'exerce sur la deuxième face 2B est légèrement plus grande que la force dite force amont ce qui maintient l'obturateur sur son siège. Un canal 6 d'évacuation de la chambre 7 de commande contrôlé par un piston 4 permet de libérer le fluide dans la chambre de commande ce qui déséquilibre les forces opposées et permet d'écarter l'obturateur de son siège.

Le déplacement de l'obturateur est donc commandé par un dispositif de commande 100 comprenant un piston 4 guidé en translation dans un alésage 30 dont une extrémité du piston présente une face 4A dite face de commande destinée à venir au contact direct d'une face 5A aimantée d'un aimant 5 permanent et dont l'autre extrémité est destinée à obturer un canal 6 d'évacuation d'une chambre de commande s'opposant à l'ouverture de l'obturateur, la face 5A aimantée étant dans un plan parallèle à la face 4A de commande.

L'usinage de ces faces est précis car la stabilité dépend du passage du flux aimanté et donc du contact étroit entre les deux surfaces en vis-à-vis. La précision de l'usinage est de deux centièmes de millimètre.

Lorsque le piston a sa face de commande « collée » contre la face aimantée, l'obturateur est dans une position stable. Pour que l'obturateur change de position, on utilise l'impulsion magnétique d'un électroaimant 10 sur le piston en sorte de « décoller » le piston de l'aimant permanent.

Avantageusement la surface de l'une des faces que sont la face de commande et la face aimantée est d'étendue moindre que l'autre surface, la dite surface réduite étant constituée par le cumul de faces 40 planes élémentaires régulièrement réparties. Bien évidemment le cumul des surfaces élémentaires est suffisant pour que la force attractive de l'aimant permanent maintienne le piston.

La réduction de la surface peut résulter d'un usinage d'une face plane afin d'y faire apparaitre des plots en surépaisseur par rapport au deuxième plan défini par l'usinage. On comprend bien que la distance entre le plan passant par les surfaces élémentaires et le deuxième plan est à prendre en compte pour l'influence du champ magnétique.

L'usinage est de quelques centièmes de millimètres environ entre cinq et vingt centièmes de millimètre ce qui est très peu mais suffisant .La fourchette haute peut aller jusqu'à cinq millimetres.

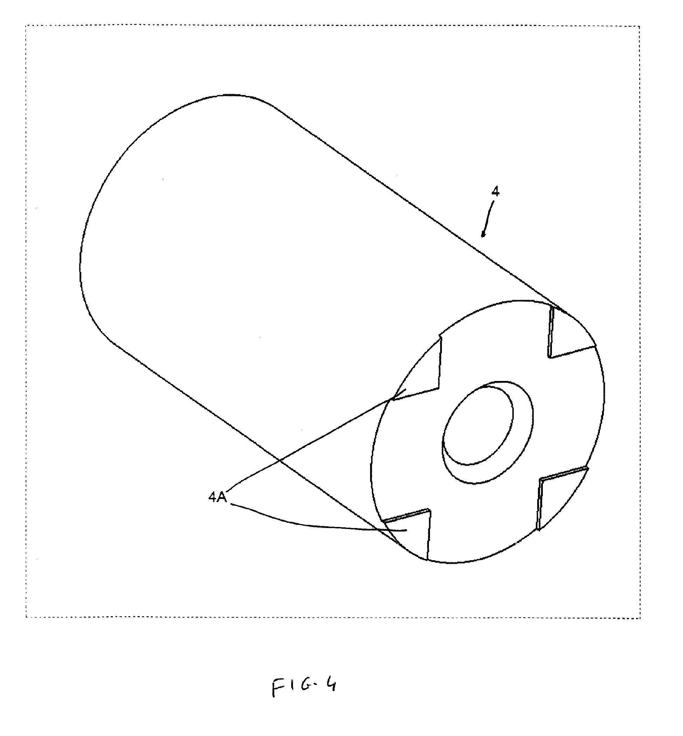

Par exemple, un usinage en croix permet de définir quatre surfaces élémentaires 40 régulièrement réparties (fig4).

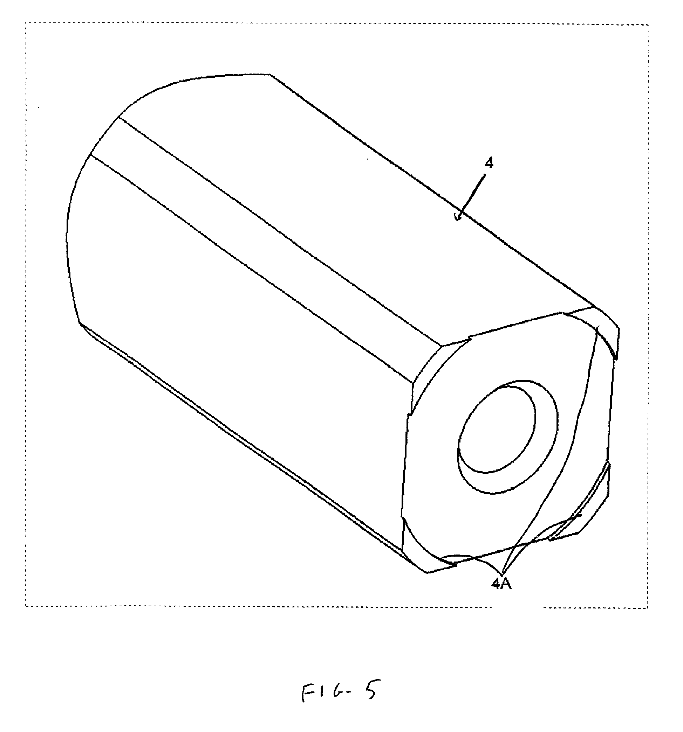

En prenant un piston de section carré et en utilisant une fraise de diamètre égale ou inferieure au coté du carré et en centrant sa rotation sur le point d'intersection des diagonales, on obtient quatre plots, un à chaque coin (fig 5). On continue donc d'obtenir un bon positionnement car la répartition des « bosses » est symétrique mais la distance entre les pièces reste faible donc le flux magnétique reste bon.

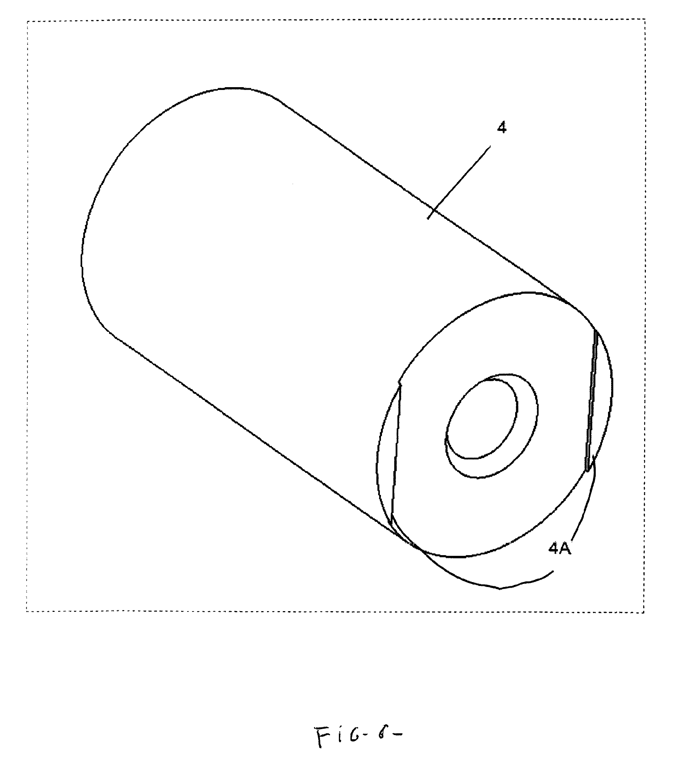

La figure 6 montre une passe de fraise laissant deux surfaces élémentaires 40.

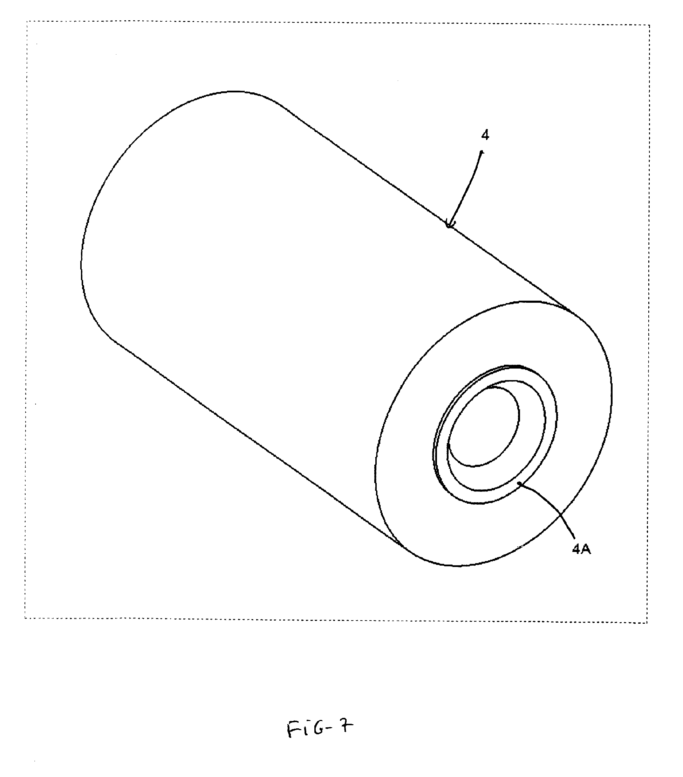

La figure 7 montre un usinage au moyen d'un tour.

La face initiale du piston ou de l'aimant est donc travaillée par enlèvement de matière et comportera donc les zones de contact dont le cumul forme la face de commande et dans un plan décalé des zones en retrait.

Une autre méthode consiste à déplacer la matière. En poinçonnant, on repousse de la matière pour former une cavité bordée par une rive en surépaisseur par rapport au plan initial (comme un volcan) mais ce poinçonnage doit être régulier pour obtenir des surfaces élémentaires identiques et régulièrement réparties dans un même plan.

Une surface lisse en contact avec une surface rugueuse obtenue aléatoirement améliore la suppression de l'effet ventouse mais est moins performante.

Pour des raisons pratiques, c'est le piston qui présente la surface de contact réduite mais ce pourrait être l'aimant.

Dans certain cas le piston est traversé par un canal qui débouche dans la face de commande le fluide circule dans ce canal, il assiste au mouvement du piston. La présence de ces plots permet au fluide d'agir plus rapidement.

La vanne représentée est une vanne type bistable, un ressort intervenant dans l'autre position de la membrane.

## Revendications

1. Dispositif de commande de l'obturateur 2 d'une vanne 1 à commande par champs magnétique ladite vanne comprenant entre l'amont et l'aval un obturateur 2 dont le déplacement est commandé par ledit dispositif 3 de commande lequel comprend un piston 4 guidé en translation dans un alésage dont une extrémité du piston présente une face 4A dite face de commande destinée à venir au contact direct d'une face 5A aimantée d'un aimant 5 permanent et dont l'autre extrémité est destinée à obturer un canal 6 d'évacuation d'une chambre 7 de commande s'opposant à l'ouverture de l'obturateur, la face aimantée étant dans un plan parallèle à la face de commande le dit dispositif de commande étant **caractérisé en ce que** la surface de l'une des faces que sont la face de commande 4A et la face 5A aimantée est d'étendue moindre que l'autre surface, la dite face étant constituée par le cumul de faces élémentaires 40 planes régulièrement réparties.

2. Dispositif de commande selon la revendication 1 **caractérisé en ce que** les faces élémentaires sont obtenues par enlèvement de matière par usinage.

3. Dispositif de commande selon la revendication 1 **caractérisé en ce que** les faces élémentaires sont obtenues par déplacement de matière.

4. Vanne hydraulique type bistable **caractérisée en ce qu'**elle comprend un dispositif de commande selon l'une quelconque des revendications 1 à 3
